# EUROPEAN PATENT SPECIFICATION

(11) **EP 1 619 218 B1**
(45) Date of publication and mention of the grant of the patent: **28.05.2008**
(21) Application number: 05106340.2
(22) Date of filing: 12.07.2005
(51) Int. Cl.: C08L 23/10, C08L 101/00, C08L 23/16, C08K 5/098, C08K 5/521, C08K 5/523, F16L 1/00

(54) **Thermoplastic vulcanizates with enhanced cooling and articles made therefrom**
Thermoplastische Vulkanisate mit verbesserter Kühlung und daraus hergestellte Gegenstände
Vulcanisats thermoplastiques a refroidissement renforcé et produits obtenus

(30) Priority: 14.07.2004 US 587697 P
(43) Date of publication of application: 25.01.2006
(73) Proprietor: Advanced Elastomer Systems, L.P., Akron, OH 44311-1059 (US)
(72) Inventor: Vromman, Thierry, 1325, FChaumont-Gistoux (BE)
(74) Representative: Weber, Thomas

(56) References cited:
- US-A1- 2002 132 956
- US-A1- 2002 177 642
- US-A1- 2004 059 061
- US-B1- 6 433 090

## Description

### BACKGROUND

### Field of Inventions

Embodiments of the present inventions generally relate to thermoplastic vulcanizates and articles made therefrom.

### Description of Related Art

Thermoplastic vulcanizates (TPVs) may be characterized by finely divided rubber particles dispersed within a plastic matrix. These rubber particles are crosslinked to promote elasticity. As such, TPVs exhibit the processing properties of the plastic and the elasticity of the rubber.

TPVs are conventionally produced by dynamic vulcanization. Dynamic vulcanization is a process whereby a rubber component is crosslinked or vulcanized within a blend of at least one non-vulcanizing polymer component while undergoing mixing or masticating at some elevated temperature. Preferably, the temperature of this curing step is greater than the melt temperature of the non-vulcanizing polymer component.

TPVs are useful for forming extruded articles for use in automotive, industrial, and consumer markets. Some of these uses require extruded articles having thick cross sections of TPV. Such thick sections are slow to cool at extrusion temperatures causing incomplete crystallization through the cross section thereby reducing optimal performance. Therefore, there is a need to enhance cooling of the TPV without sacrificing the flexibility, processability, and mechanical performance of the TPV and the articles extruded therefrom.

### SUMMARY

A thermoplastic vulcanizate (TPV) composition and articles for using the same are provided. In one or more embodiments, the TPV includes a dispersed, at least partially vulcanized rubber component; an unvulcanized, or non-crosslinked, thermoplastic component; and a nucleating agent, wherein the composition has a Shore A Hardness of at least 60 and a Shore D Hardness less than 50. Preferably, the thermoplastic component is unvulcanized or non-crosslinked.

An extruded article is also provided. In one or more embodiments, this article comprises the thermoplastic vulcanizate composition that includes the dispersed, at least partially vulcanized rubber component; the thermoplastic component; and the nucleating agent. The thermoplastic vulcanizate composition has a Shore A hardness of at least 60 and a Shore D hardness less than 50. Preferably, the extruded article is elongated and has a wall thickness of at least 5 mm.

A flexible conduit, such as cable or pipeline, is also provided. In one or more embodiments, the conduit comprises an inner housing having a channel formed therethrough; at least one tensile layer at least partially disposed about the inner housing; and the thermoplastic vulcanizate composition at least partially disposed about the at least one tensile layer. The thermoplastic vulcanizate composition includes the dispersed, at least partially vulcanized rubber component; the thermoplastic component; and the nucleating agent. The thermoplastic vulcanizate composition has a Shore A hardness of at least 60 and a Shore D hardness less than 50, and also has a wall thickness of at least 5 mm.

An underwater conduit, such as marine cable or pipeline, is further provided. In one or more embodiments, the conduit comprises a tubular having an annulus formed therethrough; at least one tensile layer at least partially disposed about the inner housing; and an outer covering at least partially disposed about the at least one tensile layer. The outer covering comprises the dispersed, at least partially vulcanized rubber component; the isotactic polypropylene component; and the nucleating agent, particularly including one comprising sodium 2,2'-methylene-bis-(2,6-di-tert-butylphenyl)phosphate or norbornane (bicyclo(2.2.1)heptane carboxylic acid salt. The outer covering has a Shore A hardness of at least 60 and a Shore D hardness less than 50, and also has a wall thickness of at least 5 mm.

### BRIEF DESCRIPTION OF THE FIGURE

A specfic embodiment of the invention, and of a use of the invention compounds, is represented in the attached illustration:

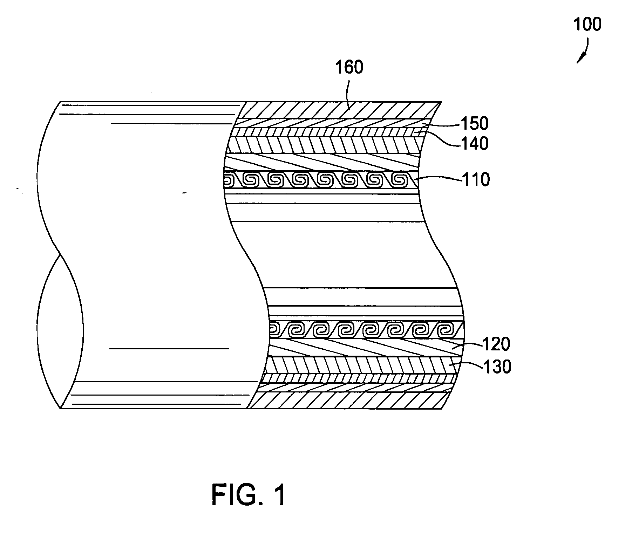

Fig. 1 is a cross-sectional view of an exemplary pipe or conduit having an outer covering made of the invention composition.

### DETAILED DESCRIPTION

### Definitions and Properties

Each of the inventions will now be described in greater detail below, including specific embodiments, versions and examples, but the inventions are not limited to these embodiments, versions or examples, which are included to enable a person having ordinary skill in the art to make and use the inventions, when the information in this patent is combined with available information and technology.

Various terms as used herein are defined below. To the extent a term used in a claim is not defined below, it should be given the broadest definition persons in the pertinent art have given that term as reflected in one or more printed publications or issued patents.

The term "thermoplastic vulcanizate composition" (also referred to as simply thermoplastic vulcanizate or TPV) is broadly defined as any material that includes a dispersed, at least partially vulcanized, rubber component; a thermoplastic component; and an additive oil. A TPV material may further include other ingredients, other additives, or both.

The term "vulcanizate" means a composition that includes some component (e.g., rubber component) that has been vulcanized. The term "vulcanized" is defined herein in its broadest sense, as reflected in any issued patent, printed publication, or dictionary, and refers in general to the state of a composition after all or a portion of the composition (e.g., crosslinkable rubber) has been subjected to some degree or amount of vulcanization. Accordingly, the term encompasses both partial and total vulcanization. A preferred type of vulcanization is "dynamic vulcanization," discussed below, which also produces a "vulcanizate." Also, in at least one specific embodiment, the term vulcanized refers to more than insubstantial vulcanization, e.g., curing (crosslinking) that results in a measurable change in pertinent properties, e.g., a change in the melt flow index (MFI) of the composition by 10% or more (according to any ASTM-1238 procedure). In at least that context, the term vulcanization encompasses any form of curing (crosslinking), both thermal and chemical, that can be utilized in dynamic vulcanization.

The term "dynamic vulcanization" means vulcanization or curing of a curable rubber blended with a thermoplastic resin under conditions of shear at temperatures sufficient to plasticize the mixture. In at least one embodiment, the rubber is simultaneously crosslinked and dispersed as micro-sized particles within the thermoplastic component. Depending on the degree of cure, the rubber to thermoplastic component ratio, compatibility of rubber and thermoplastic component, the kneader type and the intensity of mixing (shear rate), other morphologies, such as co-continuous rubber phases in the plastic matrix, are possible.

As the term is used herein, a "partially vulcanized" rubber is one wherein more than 5 weight percent (wt%) of the crosslinkable rubber is extractable in boiling xylene, subsequent to vulcanization (preferably dynamic vulcanization), e.g., crosslinking of the rubber phase of the thermoplastic vulcanizate. For example, less than 5 wt%, or less than 20 wt%, or less than 30 wt%, or less than 50 wt% of the crosslinkable rubber may be extractable from the specimen of the thermoplastic vulcanizate in boiling xylene. The percentage of extractable rubber can be determined by the technique set forth in U.S. Patent No. 4,311,628.

Preferably, the percent of soluble rubber in the cured composition is determined by refluxing a specimen in boiling xylene, weighing the dried residue and making suitable corrections for soluble and insoluble components based upon knowledge of the composition. Thus, corrected initial and final weights are obtained by subtracting from the initial weight the weight of the soluble components, other than the rubber to be vulcanized, such as extender oils, plasticizers and components of the compositions soluble in organic solvent, as well as that rubber component of the TPV that it is not intended to cure. Any insoluble pigments, fillers, are subtracted from both the initial and final weights. Any materials in the uncured rubber that are soluble in refluxing xylene or any ethylene-propylene copolymer containing no unsaturation (no termonomer) are regarded as being non-crosslinkable components of the rubber which quantities are subtracted from the rubber when calculating the percent of soluble rubber in a cured composition, up to 5 weight percent, typically between 0.5 to 2.0 weight percent, of EPDM rubber is soluble in refluxing xylene.

A "fully vulcanized" (or fully cured or fully crosslinked) rubber is one wherein less than 5 weight percent (wt%) of the crosslinkable rubber is extractable in boiling xylene or cyclohexane, subsequent to vulcanization (preferably dynamic vulcanization), e.g., crosslinking of the rubber phase of the thermoplastic vulcanizate. Preferably, less than 4 wt% or less, or 3 wt% or less, or 2 wt% or less, or 1 wt% or less of the crosslinkable rubber is extractable in boiling xylene or cyclohexane.

The term "polypropylene" as used herein broadly means any polymer that is considered a "polypropylene" by persons skilled in the art (as reflected in at least one patent or publication). Preferably, the polypropylene used in the compositions described herein that has a melting point above 110°C includes at least 90 wt% propylene units and contains isotactic sequences of those units. Alternatively, instead of isotactic polypropylene, a composition may include a syndiotactic polypropylene, which in certain cases can have a melting point above 110°C. The polypropylene can either be derived exclusively from propylene monomers (i.e., having only propylene units) or be derived from mainly propylene (more than 80% propylene) with the remainder derived from olefins, particularly ethylene, and/or C₄-C₁₀ α-olefins. As noted elsewhere herein, certain polypropylenes have a high MFI (e.g., from a low of 10, or 15, or 20 g/10 min to a high of 25 to 30 g/10 min. Others have a lower MFI, e.g., "fractional" polypropylenes which have an MFI less than 1.0. Those with high MFI may be preferred for ease of processing or compounding.

The term "nucleating agent" means any additive that produces a nucleation site for thermoplastic crystals to grow from a molten state to a solid, cooled structure. In other words, nucleating agents provide sites for growing thermoplastic crystals upon cooling the thermoplastic from its molten state.

### Specific Embodiments

Various specific embodiments are described below, at least some of which are also recited in the claims. For example, at least one specific embodiment is directed to a thermoplastic vulcanizate having an at least partially vulcanized rubber component dispersed within a thermoplastic component, and a nucleating agent for controlling crystallization. The amount of the rubber component and the amount of the thermoplastic component is controlled such that the thermoplastic vulcanizate composition has a Shore A hardness of at least 60 and a Shore D hardness less than 50.

For example, in one or more embodiments, the rubber component is present in the amount of from 5 weight percent (wt%) to 85 wt% based upon the total weight of rubber and thermoplastic. In one or more embodiments, the rubber component is present in the amount of less than 70 wt% or less than 50 wt% based upon the total weight of rubber and thermoplastic. In one or more embodiments, the thermoplastic component is present in the amount of from 15 wt% to 95 wt% based upon the total weight of rubber and thermoplastic. In one or more embodiments, the thermoplastic component is present in the amount of more than 30 wt% or more than 50 wt% based upon the total weight of rubber and thermoplastic. In one or more embodiments, the nucleating agent is present in an amount sufficient to induce crystallization to produce the described TPV compositions. In one or more embodiments, the nucleating agent is present in the amount of from 0.05 wt% to 5 wt% based on the total weight of the composition or the total weight of the thermoplastic component. In one or more embodiments, the nucleating agent is present in the amount of from less than 3 wt%, or less than 2 wt%, or less than 1 wt%, or less than 0.5 wt% based on the total weight of the composition or the total weight of the thermoplastic component.

In one or more embodiments, these TPV compositions have a Shore-A Hardness of greater than 60, greater than 70, or greater than 80. These TPV compositions also have a Shore-D Hardness of less than 50, less than 40, or less than 30. In one or more embodiments, the Shore-A Hardness may range from a low of 60, 65, or 70 to a high of 75, 80, or 90. In one or more embodiments, the Shore-D Hardness may range from a low of 5, 10, or 15 to a high of 40, 45, or 50. Those Shore Hardness values are measured according to ASTM D-2240.

Surprisingly, those hardness values are achieved without sacrificing other important mechanical properties, and also without the need to add amounts of oil that cause oil seepage. Also surprising is that those Shore-A Hardness and Shore-D Hardness values are achieved without sacrificing ease of processability. For examples, those TPV compositions have a Tensile Strength (TS) measured in accordance with ASTM D412 (ISO 37), ranging from 10 to 25 MPa, or more narrowly from 11 to 16 MPa. Those TPV compositions also have an Elongation at break measured in accordance with ASTM D412 (ISO 37), ranging from a low of 50%, 70%, or 100% to a high of 200%, 400% or 700%. Those TPV compositions also have a 100% Modulus, also measured in accordance with ASTM D412 (ISO 37), ranging from a low of 10 MPa to a high of 15 MPa, more narrowly from 11 to 14 MPa, and more narrowly from 12 MPa to 13 MPa.

NUCLEATING AGENT

The nucleating agent provides a plurality of nucleating sites for the thermoplastic component to crystallize when cooled. Surprisingly, this plurality of nucleating sites promotes even crystallization within the thermoplastic vulcanizate composition, allowing the composition to crystallize throughout an entire cross section in less time and at higher temperature. This plurality of nucleating sites produces a greater amount of smaller crystals within the thermoplastic vulcanizate composition which require less cooling time.

This even cooling distribution has many advantages and is extremely beneficial in extruded articles of the TPVs described herein having a thickness greater than 2 mm, such as greater than 5 mm, greater than 10 mm, and even greater than 15 mm. Extruded articles of the TPV described can have thicknesses greater than 20 mm and still exhibit effective cooling (*i.e.* cooling from an outer surface of the cross section to an inner surface of the cross section) at extrusion temperatures without sacrificing mechanical strength. Such extrusion temperatures typically will be at or above the melting point of the thermoplastic component.

Illustrative nucleating agents include, but are not limited to dibenzylidene sorbitol based compounds, sodium benzoate, sodium phosphate salts, as well as lithium phosphate salts. For example, the nucleating agent may include sodium 2,2'-methylene-bis-(2,6-di-tert-butylphenyl)phosphate which is commercially available from Milliken & Company. Another specific nucleating agent is norbornane (bicyclo(2.2.1)heptane carboxylic acid salt, which is commercially available from CIBA Specialty Chemicals.

### THERMOPLASTIC COMPONENT

The "thermoplastic component" may be any material that is not a "rubber" (as defined herein) and that is a polymer or polymer blend considered by persons skilled in the art as being thermoplastic in nature, e.g., a polymer that softens when exposed to heat and returns to its original condition when cooled to room temperature. The thermoplastic component may contain one or more polyolefins. Useful polyolefins include thermoplastic, crystalline polyolefin homopolymers and copolymers. Illustrative polyolefins may be prepared from mono-olefin monomers including, but are not limited to, monomers having 2 to 7 carbon atoms, such as ethylene, propylene, 1-butene, isobutylene, 1-pentene, 1-hexene, 1-octene, 3-methyl-1-pentene, 4-methyl-1-pentene, 5-methyl-1-hexene, mixtures thereof and copolymers thereof with (meth)acrylates and/or vinyl acetates. The thermoplastic component may be added to the composition alone, or in a blend of two or more polypropylenes, polyethylenes, other polyolefins, derivatives thereof, or any combination thereof. Preferably, the thermoplastic component is unvulcanized or non cross-linked.

In one or more embodiments, the thermoplastic component contains polypropylene. Preferably, the thermoplastic component contains isotactic polypropylene. A preferable isotactic polypropylene has a weight average molecular weight from 200,000 to 600,000, and a number average molecular weight from 80,000 to 200,000. A more preferable isotactic polypropylene has a weight average molecular weight from 300,000 to 500,000, and a number average molecular weight from about 90,000 to 150,000. In one or more embodiments, the isotactic polypropylene has a molecular weight distribution (Mw/Mn) (MWD), also referred to as "polydispersity index" (PDI), within a range having a low 1.5, 1.8. or 2.0 and a high of 4.5, 5, 10, 20, or 40.

The isotactic polypropylene preferably has a melt temperature (Tₘ) ranging from a low of 150°C, 155°C, or 160°C to a high of 160°C, 170°C, or 175°C. The isotactic polypropylene preferably has a glass transition temperature (T_{g}) ranging from a low of -5°C, -3°C , or 0°C to a high of 2°C , 5°C, or 10°C. The crystallization temperature (T_{c}) of the isotactic polypropylene component preferably ranges from a low of 95°C, 100°C, or 105°C to a high of 110°C, 120°C or 130°C, as measured by differential scanning calorimetry (DSC) at 10°C/min. Furthermore, the isotactic polypropylene preferably has a crystallinity of at least 25 percent as measured by differential scanning calorimetry.

In one or more embodiments, the isotactic polypropylene has a melt flow rate of less than 10 dg/min, preferably less than 2 dg/min, and still more preferably less than 1.0 dg/min. A preferred isotactic polypropylene has a heat of fusion of greater than 75 J/g, or greater than 80 J/g, or greater than 90 J/g.

In one or more embodiments, the isotactic polypropylene has a density of from 0.85 g/cc to a 0.93 g/cc. In one or more embodiments, the isotactic polypropylene has a density of from 0.88 to 0.92 g/cc. In one or more embodiments, the isotactic polypropylene has a density of from 0.90 to 0.91 g/cc.

Such an isotactic polypropylene may be synthesized using any polymerization technique known in the art such as, but not limited to, the "Phillips catalyzed reactions," conventional Ziegler-Natta type polymerizations, and single-site organometallic compound catalysis, such as metallocene catalysis, for example. Illustrative metallocene catalyst compounds include, but are not limited to, the reaction products of metallocene-alumoxane and metallocene-ionic activator reagents. Illustrative polymerization methods include, but are not limited to, slurry, bulk phase, solution phase, and any combination thereof. Polymerization may be carried out by a continuous or batch process in a single stage, such as a single reactor, or in two or more stages, such as in two or more reactors arranged in parallel or series.

### RUBBER COMPONENT

The "rubber component" may be any material that is considered by persons skilled in the art to be a "rubber," preferably a crosslinkable rubber (e.g., prior to vulcanization) or crosslinked rubber (e.g., after vulcanization). In addition to natural rubber, specific rubber components include, without limitation, any olefin-containing rubber such as ethylene-propylene copolymers (EPM), including particularly saturated compounds that can be vulcanized using free radical generators such as organic peroxides, as noted in U.S. Patent No. 5,177,147. Other rubber components are ethylene-propylene-diene (EPDM) rubber, or EPDM-type rubber. An EPDM-type rubber can be a terpolymer derived from the polymerization of at least two different monoolefin monomers having from 2 to 10 carbon atoms, preferably 2 to 4 carbon atoms, and at least one poly-unsaturated olefin having from 5 to 20 carbon atoms. Those monoolefins desirably have the formula CH₂=CH-R where R is H or an alkyl of 1-12 carbon atoms and are preferably ethylene and propylene. Desirably the repeat units from at least two monoolefins (and preferably from ethylene and propylene) are present in the polymer in weight ratios of 25:75 to 75:25 (ethylene:propylene) and constitute from a 90 to 99.6 weight percent of the polymer. The polyunsaturated olefin can be a straight chained, branched, cyclic, bridged ring, bicyclic, fused ring bicyclic compound, and preferably is a nonconjugated diene. Desirably repeat units from the nonconjugated polyunsaturated olefin are from 0.4 to 10 weight percent of the rubber.

Another type of rubber component is butyl rubber. The term "butyl rubber" includes a polymer that predominantly includes repeat units from isobutylene but also includes a few repeat units of a monomer that provides a site for crosslinking. Monomers providing sites for crosslinking include a polyunsaturated monomer such as a conjugated diene or divinyl benzene. Desirably, from 90 to 99.5 weight percent of the butyl rubber are repeat units derived from the polymerization of isobutylene, and from a 0.5 to 10 weight percent of the repeat units are front at least one polyunsaturated monomer having from 4 to 19 carbon atoms. Preferably the polyunsaturated monomer is isoprene or divinylbenzene. The polymer may be halogenated to further enhance reactivity in crosslinking. Preferably the halogen is present in amounts from 0.1 to 10 weight percent, more preferably 0.5 to 3.0 weight percent based upon the weight of the halogenated polymer; preferably the halogen is chlorine or bromine. The brominated copolymer of p-alkylstyrene, having from 9 to 12 carbon atoms, and an isomonoolefin, having from 4 to 7 carbon atoms, desirably has from 88 to 99 weight percent isomonoolefin, more desirably from 92 to 98 weight percent, and from 1 to 12 weight percent p-alkylstyrene, more desirably from 2 to 8 weight percent based upon the weight of the copolymer before halogenation. Desirably the alkylstyrene is p-methylstyrene and the isomonoolefin is isobutylene. Desirably the percent bromine is from 0.2 to a 8, more desirably from a 0.2 to 3 weight percent based on the weight of the halogenated copolymer. The copolymer is a complementary amount, i.e., from 92 to 99.8, more desirably from 97 to 99.8 weight percent. These polymers are commercially available from, for example, ExxonMobil Chemical Co.

Except as stated otherwise, the term "copolymer" means polymers derived from two or more monomers (including terpolymers, tetrapolymers, etc.), and the term "polymer" refers to carbon-containing compounds having repeat units from one or more different monomers.

EPDM, butyl and halobutyl rubbers are rubbers low in residual unsaturation and are preferred when the vulcanizate needs good thermal stability or oxidative stability. The rubbers low in residual unsaturation desirably have less than 10 weight percent repeat units having unsaturation. Desirably excluded are acrylate rubber and epichlorohydrin rubber.

Other non-limiting examples of rubber components are halobutyl rubbers and halogenated (e.g., brominated) rubber copolymers of p-alkylstyrene and an isomonoolefin having from 4 to 7 carbon atoms (e.g. isobutylene). Still other examples are rubber homopolymers of conjugated dienes having from 4 to 8 carbon atoms and rubber copolymers having at least 50 weight percent repeat units from at least one conjugated diene having from 4 to 8 carbon atoms.

Rubber components can also be natural rubbers or synthetic homo or copolymers of at least one conjugated diene. Those rubbers are higher in unsaturation than EPDM rubber or butyl rubber. Those rubbers can optionally be partially hydrogenated to increase thermal and oxidative stability. Desirably those rubbers have at least 50 weight percent repeat units from at least one conjugated diene monomer having from 4 to 8 carbon atoms. Comonomers that may be used include vinyl aromatic monomer(s) having from 8 to 12 carbon atoms and acrylonitrile or alkyl-substituted acrylonitrile monomer(s) having from 3 to 8 carbon atoms. Other comonomers desirably include repeat units from monomers having unsaturated carboxylic acids, unsaturated dicarboxylic acids, unsaturated anhydrides of dicarboxylic acids, and include divinylbenzene, alkylacrylates and other monomers having from 3 to 20 carbon atoms.

Rubber components can also be synthetic rubber, which can be nonpolar or polar depending on the comonomers. Examples of synthetic rubbers include synthetic polyisoprene, polybutadiene rubber, styrene-butadiene rubber, butadiene-acrylonitrile rubber. Amine-functionalized, carboxy-functionalized or epoxy-functionalized synthetic rubbers may be used, and examples of these include maleated EPDM, and epoxy-functionalized natural rubbers. These materials are commercially available. Non-polar rubbers are preferred; polar rubbers may be used but may require the use of one or more compatibilizers, as is well known to those skilled in the art.

A list of preferred rubber components include ethylene-propylene-diene rubber, natural rubber, butyl rubber, halobutyl rubber, halogenated rubber copolymer of p-alkystyrene and at least one isomonoolefin having 4 to 7 carbon atoms, a copolymer of isobutylene and divinyl-benzene, a rubber homopolymer of a conjugated diene having from 4 to 8 carbon atoms, a rubber copolymer having at least 50 weight percent repeat units from at least one conjugated diene having from 4 to 8 carbon atoms and a vinyl aromatic monomer having from 8 to 12 carbon atoms, or acrylonitrile monomer, or an alkyl substituted acrylonitrile monomer having from 3 to 8 carbon atoms, or an unsaturated carboxylic acid monomer, or an unsaturated anhydride of a dicarboxylic acid, or combinations thereon.

RUBBER CURING AGENT

Any curative that is capable of curing or crosslinking the rubber component may be used. Illustrative curatives include, but are not limited to, phenolic resins, peroxides, maleimides, and silicon-containing curatives. Depending on the rubber employed, certain curatives may be preferred. For example, where elastomeric copolymers containing units deriving from vinyl norbornene are employed, a peroxide curative may be preferred because the required quantity of peroxide will not have a deleterious impact on the engineering properties of the thermoplastic phase of the thermoplastic vulcanizate. In other situations, however, it may be preferred not to employ peroxide curatives because they may, at certain levels, degrade the thermoplastic components of the thermoplastic vulcanizate.

Phenolic resins are described U.S. Patent Numbers 2,972,600; 3,287,440; and 6,433,090, which are incorporated herein in this regard. The preferred phenolic resin curatives can be referred to as resole resins and are made by condensation of alkyl substituted phenols or unsubstituted phenols with aldehydes, preferably formaldehydes, in an alkaline medium or by condensation of bi-functional phenoldialcohols. The alkyl substituents of the alkyl substituted phenols typically contain 1 to 10 carbon atoms. Dimethylol phenols or phenolic resins, substituted in para-positions with alkyl groups containing 1 to 10 carbon atoms are preferred. These phenolic curatives are typically thermosetting resins and may be referred to as phenolic resin curatives or phenolic resins. These phenolic resins are ideally used in conjunction with a catalyst system. For example, non-halogenated phenol curing resins are preferably used in conjunction with halogen donors and, optionally, a hydrogen halide scavenger. Where the phenolic curing resin is halogenated, a halogen donor is not required but the use of a hydrogen halide scavenger, such as ZnO, is preferred. For a further discussion of phenolic resin curing of thermoplastic vulcanizates, reference can be made to U.S. Pat. No. 4,311,628.

Useful silicon-containing curatives generally include silicon hydride compounds having at least two SiH groups. These compounds react with carbon-carbon double bonds of unsaturated polymers in the presence of a hydrosilation catalyst. Silicon hydride compounds that are useful in practicing the present invention include, but are not limited to, methylhydrogen polysiloxanes, methylhydrogen dimethyl-siloxane copolymers, alkyl methyl polysiloxanes, bis(dimethylsilyl)alkanes, bis(dimethylsilyl)benzene, and mixtures thereof.

Peroxide curatives are generally selected from organic peroxides. Examples of organic peroxides include, but are not limited to, di-tert-butyl peroxide, dicumyl peroxide, t-butylcumyl peroxide, alpha,alpha-bis(tert-butylperoxy)diisopropyl benzene, 2,5 dimethyl 2,5-di(t-butylperoxy)hexane, 1,1-di(t-butylperoxy)-3,3,5-trimethyl cyclohexane, -butyl-4,4-bis(tert-butylperoxy)valerate, benzoyl peroxide, lauroyl peroxide, dilauroyl peroxide, 2,5-dimethyl-2,5-di(tert-butylperoxy)hexene-3, and mixtures thereof. Also, diaryl peroxides, ketone peroxides, peroxydicarbonates, peroxyesters, dialkyl peroxides, hydroperoxides, peroxyketals and mixtures thereof may be used. For a further discussion of peroxide curatives and their use for preparing thermoplastic vulcanizates, reference can be made to U.S. Pat. No. 5,656,693.

### ADDITIVE OIL

The term "additive oil" includes both "process oils" and "extender oils." For example, "additive oil" may include hydrocarbon oils and plasticizers, such as organic esters and synthetic plasticizers. Many additive oils are derived from petroleum fractions, and have particular ASTM designations depending on whether they fall into the class of paraffinic, naphthenic, or aromatic oils. Other types of additive oils include alpha olefinic synthetic oils, such as liquid polybutylene, e.g., products sold under the trademark Parapol®. Additive oils other than petroleum based oils can also be used, such as oils derived from coal tar and pine tar, as well as synthetic oils, e.g., polyolefin materials (e.g., Nexbase^{™}, supplied by Fortum Oil and Gas Oy). Certain rubber components (e.g., EPDMs, such as Vistalon 3666) include additive oil that is preblended before the rubber component is combined with the thermoplastic. The type of additive oil utilized will be that customarily used in conjunction with a particular rubber component.

The ordinarily skilled chemist will recognize which type of oil should be used with a particular rubber, and also be able to determine the amount (quantity) of oil. The additive oil can be present in amounts from 5 to 300 parts by weight per 100 parts by weight of the blend of the rubber and isotactic polypropylene components. The amount of additive oil may also be expressed as from 30 to 250 parts, and more desirably from 70 to 200 parts by weight per 100 parts by weight of the rubber component. Alternatively, the quantity of additive oil can be based on the total rubber content, and defined as the ratio, by weight, of additive oil to total rubber in the TPV, and that amount may in certain cases be the combined amount of process oil (typically added during processing) and extender oil (typically added after processing). The ratio may range, for example, from 0 to 4.0/1. Other ranges, having any of the following lower and upper limits, may also be utilized: a lower limit of 0.4/1, or 0.6/1, or 0.8/1, or 1.0/1, or 1.2/1, or 1.5/1, or 1.8/1, or 2.0/1, or 2.5/1; and an upper limit (which may be combined with any of the foregoing lower limits) of 4.0/1, or 3.8/1, or 3.5/1, or 3.2/1, or 3.0/1, or 2.8/1. Larger amounts of additive oil can be used, although the deficit is often reduced physical strength of the composition, or oil weeping, or both.

### OTHER ADDITIVES

The thermoplastic vulcanizate composition may further include one or more additives. Illustrative additives include, but are not limited, to particulate fillers, lubricants, antioxidants, antiblocking agents, stabilizers, anti-degradants, anti-static agents, waxes, foaming agents, pigments, flame retardants, processing aids, adhesives, tackifiers, plasticizers, wax, and discontinuous fibers (such as world cellulose fibers). Exemplary particulate fillers are carbon black, silica, titanium dioxide, calcium carbonate, colored pigments, clay, and combinations thereof. When non-black fillers are used, it may be desirable to include a coupling agent to compatibilize the interface between the non-black fillers and polymers. Desirable amounts of carbon black, or other colorants, when present, are from about 5 to about 250 parts by weight per 100 parts by weight of rubber.

### PROCESS DESCRIPTION

In one or more embodiments, the TPV is prepared by melt-mixing in any order, the thermoplastic component, the rubber component, and any additive in a mixer heated to above the melting temperature of the thermoplastic component, such as a polypropylene component. The mixing equipment can include Banbury^{™} mixers, Brabender^{™} mixers, multiroll mills and melt mixing extruders, for example.

After sufficient molten-state mixing to form a well mixed blend, one or more curatives are added. In one or more embodiments, it is preferred to add the one or more curatives in solution with a liquid, such as a rubber processing oil or in a masterbatch, for example, which is compatible with the other components. It is convenient to follow the progress of crosslinking (vulcanization) by monitoring mixing torque or mixing energy requirements during mixing. The mixing torque or mixing energy curve generally goes through a maximum after which mixing can be continued somewhat longer to improve the fabricability of the blend.

Crosslinking (vulcanization) of the rubber can occur in a few minutes or less depending on the mix temperature, shear rate, and activators present for the curative. Suitable curing temperatures include from 120°C or 150°C to 250°C, more preferred temperatures are from a 150°C or 170°C to 425°C or 250°C. The one or more nucleating agents can be added before, during, or after vulcanization. After discharge from the mixer, the blend containing the at least partially vulcanized rubber dispersed in the polypropylene component along with the one or more nucleating agents can be milled, chopped, extruded, pelletized, injection-molded, or processed by any other desirable technique.

### ARTICLES

The thermoplastic vulcanizate composition is useful for making a variety of articles including, but not limited to, conduits, pipes, tubing, hoses, tires, belts, gaskets, moldings and molded parts, for example. The thermoplastic vulcanizate composition is useful for making articles by extrusion, injection molding, blow molding, and compression molding techniques. Preferably, the thermoplastic vulcanizate composition is useful for making articles by extrusion, and more preferably elongated, extruded articles having lengths greater than 1 meter, such as greater than 50 meters, greater than 100 meters, or greater than 1,000 meters, for example. In one particular embodiment, the thermoplastic vulcanizate composition may be useful as a covering or sheath (*i*.*e*. jacket) disposed about an elongated conduit for transporting fluids, such as oil and gas related fluids for example. The thermoplastic vulcanizate composition may also be useful as a covering or jacket disposed about cables containing electrical power cables, electrical conductors, fiber optics, data lines, or other communication lines, and combinations or bundles thereof. The thermoplastic vulcanizate composition may further be useful for securing wires, ropes.

Figure 1 shows a cross-sectional view of an exemplary pipe or conduit 100 having an outer covering made of the TPV described above. The conduit 100 includes an inner tube 110 having a channel or bore 105 formed therethrough. The tube 110 is made of a flexible material and includes a helically wound flat or profiled metallic strips to provide collapse resistance. A polymeric sheath 120 is at least partially disposed or wrapped around the tube 110 for containing the fluid in the pipe. The sheath 120 is preferably made of an impervious polymeric material. A layer 130 is at least partially disposed or wrapped around the layer 120 and provides resistance to internal pressure, hydrostatic collapse and crush. The layer 130 can be formed by helically wrapping a continuous metallic strip, preferably formed of carbon steel, with adjacent windings being interlocked, to form a flexible layer that provides significant hoop and axial strength, such as FLEXLOK^{™}, commercially available from Wellstream, Inc.

An inner tensile layer 140 is at least partially disposed or wrapped around the layer 130, and an outer tensile layer 150 is at least partially disposed or wrapped around the layer 140. Each layer 140 and 150 includes at least one tensile reinforcement element that is wound to resist the hoop stress, the axial component of the internal pressure, and the axial load due to the weight of the suspended pipe and exterior effects. Although not shown in the drawings, one or more adhesive layers may be provided between any of the layers 110, 120, 130, 140, and 150.

An outer covering or sheath 160 is then at least partially disposed or otherwise formed over the outer tensile layer 150. The sheath 160 is fabricated from the TPV described herein. The TPV sheath 160 provides low temperature flexibility, improved thermal insulation characteristics, lighter weight and resistance to degradation. The TPV sheath 160 also has a very good resistance to chemical elements and fatigue when in contact with drilling fluids and seawater. Moreover, the TPV sheath 160 exhibits good fatigue properties, low environmental stress-cracking resistance, and good temperature resistance. More importantly, the TPV sheath 160 is capable of having a cross sectional thickness greater than 5 mm, such as greater than 6 mm, greater than 10 mm, and greater than 16 mm, because of the enhanced cooling afforded by the one or more nucleating agents.

As mentioned above, it is believed that the addition of the one or more nucleating agents provides a plurality of nucleating sites for the polypropylene component to crystallize. As such, a greater amount of smaller crystals are formed in contrast to fewer, larger crystals that form without the addition of the nucleating agents described herein. As a result, the smaller crystals require less cooling time, thereby setting the entire cross section of the TPV material as opposed to just the outer portions.

### EXAMPLES

The following examples illustrate the reduced cooling times of extruded TPV samples. As seen below, faster cooling times have been observed even in samples having a thickness of greater than 5 mm without a sacrifice in performance or strength of the TPV materials.

For purposes of convenience, various specific test procedures are identified for determining properties such as elongation break, peak stress, break strain, modulus, Shore A Hardness and Shore D Hardness. However, when a person of ordinary skill reads this patent and wishes to determine whether a composition or polymer has a particular property identified in a claim, then any published or well-recognized method or test procedure can be followed to determine that property, although the specifically identified procedure is preferred. Each claim should be construed to cover the results of any of such procedures, even to the extent different procedures may yield different results or measurements. Thus, a person of ordinary skill in the art is to expect experimental variations in measured properties that are reflected in the claims. All numerical values can be considered to be "about" or "approximately" the stated value, in view of the nature of testing in general.

Comparative Samples 1-5 (CS 1-5) are compositions of a TPV with no nucleating agent. Comparative Samples 1-5 were extruded samples of Santoprene^{®} 203-50 (Advanced Elastomer Systems, L.P.) and polypropylene in the weight percentages shown in Table 1.

Samples 1-6 (S1-6) are compositions of a TPV blended with one or more nucleating agents as described. Samples 1-6 were extruded samples of Santoprene^{®} 203-50 (Advanced Elastomer Systems, L.P.), polypropylene, and the one or more nucleating agents in the weight percentages shown in Table 1.

Each extruded strip was 46 mm wide and 2 mm thick, and was extruded on a MAPRE 38mm single-screw extruder. The extruded strip of Comparative Sample 1 (CS-1) was cooled at rapid cooling conditions using tap-water. The extruded strip of Comparative Sample 2 (CS-2) was cooled at slower cooling conditions with air. The extruded strips of Comparative Samples 3-5 (CS 3-5) were cooled in a drying oven at 120°C for 10 minutes, 20 minutes, or 30 minutes, as recited in Table 1. Each of the extruded strips of Samples 1-6 (S 1-6) were cooled in a drying oven at 120°C for 20 minutes. The drying oven was placed in close proximity to the extrusion line to prevent a premature cooling of the extruded strip samples.

The tensile properties were evaluated using method TPE 0153, on a dumbbell ISO type 1, at 50 mm/min speed. The reported result is a median value of 5 measurements each taken at room temperature. As shown in Table 1, the mechanical characteristics of Comparative Samples 1-5 (CS 1-5) substantially decreased after an aging of 10, 20 and 30 minutes in the oven at 120°C. Conversely, the use of nucleating agents showed a positive effect in comparison with the decreased properties observed for the Comparative Samples. Particularly, Samples 1-3 and 5-6 each exhibited at least a 10% increase in Peak Stress, more than twice the Break Strain, and a roughly a 10% increase in 100% Modulus compared to the Comparative Sample 4 which was also cooled in the oven for 20 minutes at 120°C. Furthermore, Samples 1-6 showed the most favorable results compared to TPV samples (Comparative Sample 1) cooled with the more desirable, timely method of water cooling.

**Table 1:**

| | **TPV** | **POLYPROPYLENE** | **IRGASTAB NA 11** | **HPN 68L** | **COOLING CONDITIONS** | **TENSILE STRENGTH (MPa)** | **ULTIMATE ELONGATION (%)** | **100% MODULUS (MPa)** |
|---|---|---|---|---|---|---|---|---|
| Comparative 1 | 95 | 5 | - | - | Water | 24.27 | 623 | 12.93 |
| Comparative 2 | 95 | 5 | - | - | Air | 16.29 | 383 | 13.28 |
| Comparative 3 | 95 | 5 | - | - | 10 min @ 120°C | 10.91 | 55 | 12.08 |
| Comparative 4 | 95 | 5 | - | - | 20 min @ 120°C | 11.75 | 74 | 11.96 |
| Comparative 5 | 95 | 5 | - | - | 30 min @ 120°C | 10.86 | 57 | - |
| Sample 1 | 94.9 | 5 | 0.1 | - | 20 min @ 120°C | 13.6 | 162 | 12.87 |
| Sample 2 | 94.8 | 5 | 0.2 | - | 20 min @ 120°C | 13.21 | 140 | 12.85 |
| Sample 3 | 94.5 | 5 | 0.5 | 1 | 20min@120°C | 14.06 | 206 | 12.7 |
| Sample 4 | 94.9 | 5 | - | 0.1 | 20 min @ 120°C | 11.64 | 91 | - |
| Sample 5 | 94.8 | 5 | - | 0.2 | 20 min @ 120°C | 13.33 | 175 | 12.34 |
| Sample 6 | 94.5 | 5 | | 0.5 | 20 min @ 120°C | 12.46 | 171 | 11.63 |

## Claims

1. A thermoplastic vulcanizate composition, comprising:
a dispersed, at least partially vulcanized rubber component;
a thermoplastic component; and
a nucleating agent for the thermoplastic component, wherein the composition has a Shore A Hardness of at least 60 and a Shore D Hardness less than 50 according to ASTM D-2240 and the nucleating agent comprises sodium 2,2'-methylene-bis-(2,6-di-tert-butylphenyl)phosphate or norbornane (bicyclo(2.2.1)heptane) carboxylic acid salt.

2. The composition of claim 1, wherein the thermoplastic component consists of isotactic polypropylene.

3. The composition of claim 1, wherein the dispersed, at least partially vulcanized rubber component composition is present in the amount of from 5 % to 85 % by weight of the rubber component plus thermoplastic component.

4. The composition of claim 1, wherein the thermoplastic component is present in the amount of more than 30 wt% based on total weight of the rubber component and the thermoplastic component.

5. The composition of claim 1, wherein the nucleating agent is present in the amount of from 0.05 % to 5 % by total weight of the thermoplastic vulcanizate composition.

6. The composition of claim 1, wherein the Shore A Hardness according to ASTM D-2240 is from 60 to 90.

7. The composition of claim 1, wherein the Shore D Hardness according to ASTM D-2240 is from 10 to 50.

8. An elongated, extruded article, comprising a thermoplastic vulcanizate composition that includes:
a dispersed, at least partially vulcanized rubber component;
a thermoplastic component; and
a nucleating agent comprising sodium 2,2'-methylene-bis-(2,6-di-tert-butylphenyl)phosphate or norbornane (bicyclo(2.2.1)heptane) carboxylic acid salt,
wherein the thermoplastic vulcanizate composition has a Shore A hardness of at least 60 and a Shore D hardness less than 50 according to ASTM D-2240; and
wherein the elongated, extruded article has a wall thickness of at least 5 mm.

9. The article of claim 8, wherein the extruded article has a rounded or polygonal cross section.

10. The article of claim 8, wherein the extruded article is tubing.

11. The article of claim 8, wherein the wall thickness of the article is at least 10 mm.

12. The article of claim 8, wherein the wall thickness of the article is at least 15 mm.

13. A flexible conduit, comprising:
an inner housing having a channel formed therethrough;
at least one tensile layer at least partially disposed about the inner housing; and
a thermoplastic vulcanizate composition at least partially disposed about the at least one tensile layer, the thermoplastic vulcanizate composition comprising:
a dispersed, at least partially vulcanized rubber component;
a thermoplastic component; and
a nucleating agent comprising sodium 2,2'-methylene-bis-(2,6-di-tert-butylphenyl)phosphate /or norbornane (bicyclo(2.2.1)heptane) carboxylic acid salt,
wherein the thermoplastic vulcanizate composition has a Shore A hardness of at least 60 and a Shore D hardness less than 50 according to ASTM D-2240; and
wherein the thermoplastic vulcanizate composition has a wall thickness of at least 5 mm.

14. The conduit of claim 13, wherein the inner housing or the at least one tensile layer comprises helically wound metallic strips.

15. An underwater conduit, comprising:
a tubular having an annulus formed therethrough;
at least one tensile layer at least partially disposed about the inner housing; and
an outer covering at least partially disposed about the at least one tensile layer, the outer covering comprising:
a dispersed, at least partially vulcanized rubber component;
an isotactic polypropylene component; and
a nucleating agent comprising sodium 2,2'-methylene-bis-(2,6-di-tert-butylphenyl)phosphate or norbornane (bicyclo(2.2.1)heptane) carboxylic acid salt,
wherein the outer covering has a Shore A hardness of at least 60 and a Shore D hardness less than 50 according to ASTM D-2240; and
wherein the outer covering composition has a wall thickness of at least 5 mm.

16. The underwater conduit of claim 15, wherein the Shore A Hardness according to ASTM D-2240 is from 60 to 90.

17. The underwater conduit of claim 15, wherein the Shore D Hardness according to ASTM D-2240 is from 10 to 50.

18. The underwater conduit of claim 15, wherein the wall thickness of the outer covering is at least 15 mm.

## Patentansprüche

1. Thermoplastische Vulkanisatzusammensetzung, die Folgendes umfasst:
eine dispergierte, wenigstens partiell vulkanisierte Kautschukkomponente;
eine thermoplastische Komponente; und
einen Keimbildner für die thermoplastische Komponente, wobei die Zusammensetzung eine Shore-A-Härte von wenigstens 60 und eine Shore-D-Härte von weniger als 50 gemäß ASTM D-2240 hat und der Keimbildner Natrium-2,2'-methylenbis(2,6-di-tert-butylphenyl)phosphat oder Norbornan(bicyclo[2,2.1]heptan)carbonsäuresalz umfasst.

2. Zusammensetzung gemäß Anspruch 1, wobei die thermoplastische Komponente aus isotaktischem Polypropylen besteht.

3. Zusammensetzung gemäß Anspruch 1, wobei die dispergierte, wenigstens partiell vulkanisierte Kautschukkomponentenzusammensetzung in einer Menge von 5 bis 85 Gew.-% der Kautschukkomponente plus thermoplastischen Komponente vorhanden ist.

4. Zusammensetzung gemäß Anspruch 1, wobei die thermoplastische Komponente in einer Menge von mehr als 30 Gew.-% vorhanden ist, bezogen auf das Gesamtgewicht der Kautschukkomponente und der thermoplastischen Komponente.

5. Zusammensetzung gemäß Anspruch 1, wobei der Keimbildner in einer Menge von 0,05 bis 5 Gew.-% des Gesamtgewichts der thermoplastischen Vulkanisatzusammensetzung vorhanden ist.

6. Zusammensetzung gemäß Anspruch 1, wobei die gemäß ASTM D-2240 gemessene Shore-A-Härte 60 bis 90 beträgt.

7. Zusammensetzung gemäß Anspruch 1, wobei die gemäß ASTM D-2240 gemessene Shore-D-Härte 10 bis 50 beträgt.

8. Gestreckter, extrudierter Artikel, der eine thermoplastische Vulkanisatzusammensetzung umfasst, die Folgendes umfasst:
eine dispergierte, wenigstens partiell vulkanisierte Kautschukkomponente;
eine thermoplastische Komponente; und
einen Keimbildner, der Natrium-2,2'-methylenbis(2,6-di-tert-butylphenyl)-phosphat oder Norbornan(bicyclo[2.2.1]heptan)carbonsäuresalz umfasst;
wobei die thermoplastische Vulkanisatzusammensetzung eine Shore-A-Härte von wenigstens 60 und eine Shore-D-Härte von weniger als 50 gemäß ASTM D-2240 hat; und
wobei der gestreckte, extrudierte Artikel eine Wanddicke von wenigstens 5 mm hat.

9. Artikel gemäß Anspruch 8, wobei der extrudierte Artikel einen runden oder polygonalen Querschnitt hat.

10. Artikel gemäß Anspruch 8, wobei es sich bei dem extrudierten Artikel um Rohrmaterial handelt.

11. Artikel gemäß Anspruch 8, wobei die Wanddicke des Artikels wenigstens 10 mm beträgt.

12. Artikel gemäß Anspruch 8, wobei die Wanddicke des Artikels wenigstens 15 mm beträgt.

13. Flexible Leitung, die Folgendes umfasst:
ein inneres Gehäuse, durch das ein Kanal gebildet ist;
wenigstens eine Zugschicht, die sich wenigstens teilweise um das innere Gehäuse herum befindet; und
eine thermoplastische Vulkanisatzusammensetzung, die sich wenigstens teilweise um die wenigstens eine Zugschicht herum befindet, wobei die thermoplastische Vulkanisatzusammensetzung Folgendes umfasst:
eine dispergierte, wenigstens partiell vulkanisierte Kautschukkomponente;
eine thermoplastische Komponente; und
einen Keimbildner, der Natrium-2,2'-methylenbis(2,6-di-tert-butylphenyl)-phosphat oder Norbornan(bicyclo[2.2.1]heptan)carbonsäuresalz umfasst;
wobei die thermoplastische Vulkanisatzusammensetzung eine Shore-A-Härte von wenigstens 60 und eine Shore-D-Härte von weniger als 50 gemäß ASTM D-2240 hat; und
wobei die thermoplastische Vulkanisatzusammensetzung eine Wanddicke von wenigstens 5 mm hat.

14. Leitung gemäß Anspruch 13, wobei das innere Gehäuse oder die wenigstens eine Zugschicht spiralig gewundene Metallstreifen umfasst.

15. Unterwasserleitung, die Folgendes umfasst:
ein Schlauchteil, durch den hindurch ein durchgehender Ringbereich ausgebildet ist;
wenigstens eine Zugschicht, die sich wenigstens teilweise um das innere Gehäuse herum befindet; und
eine äußere Abdeckung, die sich wenigstens teilweise um die wenigstens eine Zugschicht herum befindet, wobei die äußere Abdeckung Folgendes umfasst:
eine dispergierte, wenigstens partiell vulkanisierte Kautschukkomponente;
eine isotaktische Polypropylenkomponente; und
einen Keimbildner, der Natrium-2,2'-methylenbis(2,6-di-tert-butylphenyl)-phosphat oder Norboman(bicydo[2.2.1]heptan)carbonsäuresalz umfasst;
wobei die äußere Abdeckung eine Shore-A-Härte von wenigstens 60 und eine Shore-D-Härte von weniger als 50 gemäß ASTM D-2240 hat; und
wobei die Zusammensetzung der äußeren Abdeckung eine Wanddicke von wenigstens 5 mm hat.

16. Unterwasserleitung gemäß Anspruch 15, wobei die gemäß ASTM D-2240 gemessene Shore-A-Härte 60 bis 90 beträgt.

17. Unterwasserleitung gemäß Anspruch 15, wobei die gemäß ASTM D-2240 gemessene Shore-D-Härte 10 bis 50 beträgt.

18. Unterwasserleitung gemäß Anspruch 15, wobei die Wanddicke der äußeren Abdeckung wenigstens 15 mm beträgt.

## Revendications

1. Composition de vulcanisat thermoplastique, comprenant :
un constituant du type caoutchouc dispersé, au moins partiellement vulcanisé ;
un constituant thermoplastique ; et
un agent de nucléation pour le constituant thermoplastique, ladite composition ayant une dureté Shore A d'au moins 60 et une dureté Shore D inférieure à 50 suivant la norme ASTM D-2240 et l'agent de nucléation comprenant du 2,2'-méthylène-bis-(2,6-ditertiobutylphényl)phosphate de sodium ou un sel d'acide norbornane(bicyclo(2.2.1)heptane)carboxylique.

2. Composition suivant la revendication 1, dans laquelle le constituant thermoplastique consiste en polypropylène isotactique.

3. Composition suivant la revendication 1, dans laquelle le constituant du type caoutchouc dispersé, au moins partiellement vulcanisé, est présent en une quantité de 5 % à 85 % en poids du constituant du type caoutchouc plus le constituant thermoplastique.

4. Composition suivant la revendication 1, dans laquelle le constituant thermoplastique est présent en une quantité supérieure à 30 % en poids sur la base du poids total du constituant du type caoutchouc et du constituant thermoplastique.

5. Composition suivant la revendication 1, dans laquelle l'agent de nucléation est présent en une quantité de 0,05 % à 5 % du poids total de la composition de vulcanisat thermoplastique.

6. Composition suivant la revendication 1, dans laquelle la dureté Shore A suivant la norme ASTM D-2240 va de 60 à 90.

7. Composition suivant la revendication 1, dans laquelle la dureté Shore D suivant la norme ASTM D-2240 va de 10 à 50.

8. Article extrudé allongé, comprenant une composition de vulcanisat thermoplastique qui comprend :
un constituant du type caoutchouc dispersé, au moins partiellement vulcanisé ;
un constituant thermoplastique ; et
un agent de nucléation comprenant du 2,2'-méthyléne-bis-(2,6-ditertiobutylphényl)phosphate de sodium ou un sel d'acide norbornane(bicyclo(2.2.1)heptane)carboxylique,
la composition de vulcanisat thermoplastique ayant une dureté Shore A d'au moins 60 et une dureté Shore D inférieure à 50 suivant la norme ASTM D-2240 ; et
l'article extrudé allongé ayant une épaisseur de paroi d'au moins 5 mm.

9. Article suivant la revendication 8, l'article extrudé ayant une section transversale arrondie ou polygonale.

10. Article suivant la revendication 8, l'article extrudé étant un tube.

11. Article suivant la revendication 8, dont l'épaisseur de paroi est égale à au moins 10 mm.

12. Article suivant la revendication 8, dont l'épaisseur de paroi est égale à au moins 15 mm.

13. Conduit flexible, comprenant :
un boîtier intérieur à travers lequel est formé un canal ;
au moins une couche de traction disposée au moins partiellement autour du boîtier intérieur ; et
une composition de vulcanisat thermoplastique disposée au moins partiellement autour de ladite au moins une couche de traction, la composition de vulcanisat thermoplastique comprenant :
un constituant du type caoutchouc dispersé, au moins partiellement vulcanisé ;
un constituant thermoplastique ; et
un agent de nucléation comprenant du 2,2'-méthylène-bis-(2,6-ditertiobutylphényl)phosphate de sodium ou un sel d'acide norbornane(bicyclo(2.2.1)heptane)carboxylique,
la composition de vulcanisat thermoplastique ayant une dureté Shore A d'au moins 60 et une dureté Shore D inférieure à 50 suivant la norme ASTM D-2240 ; et
la composition de vulcanisat thermoplastique ayant une épaisseur de paroi d'au moins 5 mm.

14. Conduit suivant la revendication 13, dans lequel le boîtier intérieur sur ladite au moins une couche de traction comprend des bandelettes métalliques à enroulement hélicoïdal.

15. Conduit immergé, comprenant :
un élément tubulaire comportant une partie annulaire formée à travers celui-ci ;
au moins une couche de traction disposée au moins partiellement autour du boîtier intérieur ; et
un revêtement extérieur disposé au moins partiellement autour de ladite au moins une couche de traction, le revêtement extérieur comprenant :
un constituant du type caoutchouc dispersé, au moins partiellement vulcanisé ;
un constituant du type polypropylène isotactique ; et
un agent de nucléation comprenant du 2,2'-méthylène-bis-(2,6-ditertiobutylphényl)phosphate de sodium ou un sel d'acide norbornane(bicyclo(2.2.1)heptane)carboxylique,
le revêtement extérieur ayant une dureté Shore A d'au moins 60 et une dureté Shore D inférieure à 50 suivant la norme ASTM D-2240 ; et
la composition de revêtement extérieur ayant une épaisseur de paroi d'au moins 5 mm.

16. Conduit immergé suivant la revendication 15, dans lequel la dureté Shore A suivant la norme ASTM D-2240 va de 60 à 90.

17. Conduit immergé suivant la revendication 15, dans lequel la dureté Shore D suivant la norme ASTM D-2240 va de 10 à 50.

18. Conduit immergé suivant la revendication 15, dans lequel l'épaisseur de paroi du revêtement extérieur est égale à au moins 15 mm.
